# EUROPÄISCHE PATENTSCHRIFT

(11) **EP 0 888 252 B1**
(45) Veröffentlichungstag und Bekanntmachung des Hinweises auf die Patenterteilung: **24.11.2004**
(21) Anmeldenummer: 97905106.7
(22) Anmeldetag: 27.02.1997
(51) Int. Cl.: C02F 1/68, A01K 63/04

(54) **MITTEL ZUR HERSTELLUNG VON AQUARIEN- UND GARTENTEICHWASSER UND VERWENDUNG DAVON**
SUBSTANCES FOR THE PRODUCTION OF WATER SUITABLE FOR AQUARIUMS OR GARDEN PONDS AND USE THEREOF
SUBSTANCES POUR PRODUIRE DE L'EAU DESTINEE A DES AQUARIUMS ET A DES PLANS D'EAU DE JARDIN ET UTILISATION DES DITES SUBSTANCES

(30) Priorität: 21.03.1996 DE 19611135
(43) Veröffentlichungstag der Anmeldung: 07.01.1999
(73) Patentinhaber: Tetra GmbH, 49324 Melle (DE)
(72) Erfinder: RITTER, Günter, D-322578 Bünde (DE)
(74) Vertreter: Miller, Andreas, Dr.
(86) Internationale Anmeldenummer: PCT/EP1997/000950
(87) Internationale Veröffentlichungsnummer: WO 1997/034838

(56) Entgegenhaltungen:
- WO-A-95/28830
- BE-A- 691 735
- DE-A- 19 533 994
- DE-C- 51 320
- US-A- 4 500 510
- US-A- 4 707 263
- PATENT ABSTRACTS OF JAPAN vol. 095, no. 002, 31.März 1995 & JP 06 304577 A (HISASHI SATO), 1.November 1994,
- PATENT ABSTRACTS OF JAPAN vol. 016, no. 269 (C-0952), 17.Juni 1992 & JP 04 066181 A (ISAO HORIUCHI), 2.März 1992,
- PATENT ABSTRACTS OF JAPAN vol. 006, no. 266 (C-142), 25.Dezember 1982 & JP 57 159494 A (TAKESHI YANAGISAWA), 1.Oktober 1982, & DATABASE WPI Section Ch, Week 8245 Derwent Publications Ltd., London, GB; Class B04, AN 82-96165E

## Beschreibung

Die Erfindung betrifft Mittel und die Verwendung des Mittels zur Herstellung von biologisch vorteilhaftem bis naturnahem Hälterungswasser, insbesondere von Aquarien- und Gartenteichwasser, auch aus biologisch ungünstigem bis schädlichem Ausgangswasser.

In der Aquaristik bzw. der Haltung von Wassertieren hat es sich seit ca. 30 Jahren eingebürgert, das Hälterungswasser regelmäßig durch frisches Wasser teilweise oder komplett auszutauschen und dadurch die Belastung des Hälterungswassers in Relation zur Wasserwechselrate zu reduzieren.

Von den möglichen Frischwasserquellen, wie z. B. Brunnenwasser, Regenwasser, Leitungswasser hat das Leitungs- oder Trinkwasser aufgrund seiner überragenden Reinheit mit Abstand die größte Bedeutung gewonnen.

Bei der Verwendung von Leitungs- bzw. Trinkwasser als Frischwasser für Aquarien treten jedoch Probleme auf, da Leitungs- bzw. Trinkwasser im Hinblick auf seine Verwendung als Lebensmittel für den Menschen in den örtlichen Wasserwerken besonders aufbereitet wird. Aufgrund dieser durch die Trinkwasserverordnung geregelten besonderen Eigenschaften unterscheidet sich Trinkwasser in folgenden Aspekten erheblich von natürlichen, bioaktiven Wässern:
- Es ist nahezu keimfrei,
- es enthält keine oder nur in vernachlässigbarem Ausmaß organische Stoffe,
- es enthält unkomplexierte Schwermetalle, die zwar für den Menschen völlig unschädlich sind, sich auf Wasserorganismen aber hochtoxisch auswirken können,
- es ist häufig mit desinfizierenden, entkeimenden Verbindungen, z. B. Chlor oder anderen Aktivchlorverbindungen versetzt, um den hygienischen Charakter des Trinkwassers bis zum Endverbraucher zu gewährleisten.
- Das Ca : Mg -Verhältnis ist häufig viel zu hoch, oft fehlt Mg²⁺ gänzlich.
- In Inlandgebieten ist der Jod-Gehalt äußerst niedrig.
- der Redox-Charakter liegt, schon durch die Anwesenheit von Chlor und Aktivchlorverbindungen bedingt, im stark oxidierenden Bereich.
- Es wirkt - aufgrund der oben geschilderten Eigenschaften, insbesondere wegen des Fehlens organischer Verbindungen - sehr aggressiv auf die empfindlichen Schleimhäute von Fischen und anderen Wasserorganismen.
   Aus all den beschriebenen Eigenschaften des Leitungs- oder Trinkwassers folgt, daß es aufgrund seiner Reinheit zwar als sehr geeignet erscheint, belastete Hälterungswässer durch Wasserwechsel zu verbessern, aber dieser zunächst sehr positive Aspekt durch die Reihe der oben beschriebenen Negativfaktoren zunichte gemacht wird oder sogar ins Gegenteil verkehrt wird.
   Aus DE 22 21 545 ist bekannt, daß sich wichtige aquaristische Probleme des Leitungs- oder Trinkwassers mit funktionalen synthetischen Zusätzen verkleinern oder lösen lassen.
- Die Problematik von Chlor bzw. Aktivchlorverbindungen läßt sich mittels Reduktion durch Natriumthiosulfat lösen.
- Schwermetalle können durch Komplexierung mit synthetischen Komplexbildnern wie EDTA (Ethylendiamintetracetat) entfernt werden.
- Aggressives Verhalten des Leitungswassers kann durch Zusatz von Polyvinylpyrrolidonen gemildert werden.
- Als Anti-Streß-Komponente hat sich der Zusatz von Vitamin B₁ bewährt.

Die akuten Negativaspekte des Leitungs- oder Trinkwassers werden durch diese vorgeschlagenen Mittel zwar behandelt, gemildert oder eliminiert, jedoch bringen diese Maßnahmen neue, unnatürliche Stoffe in das naturnahe Hälterungssystem, deren Auswirkungen auf biologische Prozesse nicht genau bekannt sind.

Auch die biologische Abbaubarkeit dieser synthetischen Komponenten ist in der Regel aufgrund ihrer xenobiotischen (biologisch fremden) Natur verzögert oder nicht gegeben.

Von EDTA und analogen Verbindungen und von Polyvinylpyrrolidonen ist bekannt, daß sie nicht oder nur sehr langsam abgebaut werden. Bei der Verwendung von Thiosulfat als Antichlor-Reagenz entstehen in Abhängigkeit der Stöchiometrie weitere Polysulfanpolysulfonsäuren, z. B. Tetrathionat, S₄O₆²⁻, und andere Reaktionsprodukte, deren biologische Wirkung ebenfalls nicht bekannt ist. Zumindest stellen Thiosulfat und seine komplizierten Folgeprodukte biologisch fremde, potentiell schädliche Substanzen dar.

Zusammenfassend läßt sich feststellen, daß die in DE 22 21 545 beschriebenen Problemlösungen zwar chemisch gesehen einwandfrei funktionieren werden, aber ihre biologischen Auswirkungen auf das Kleinökosystem Aquarium oder andere Hälterungssysteme nicht bekannt und daher zunächst als höchstens neutral einzustufen sind.

Die WO-A-95/28830 beschreibt ein bei Umgebungstemperatur ablaufendes Verfahren zur Herstellung eines wasserstabilen Futtermittels für Wassertiere, einschließlich Fischen und Krustentieren und ein so hergestelltes Futtermittel für Wassertiere.

Die JP-A-06-304 577 beschreibt ein Reingungsmittel für Wasser, das aus einem Mittel Nr. 1 und einem Mittel Nr. 2 besteht. Die Mischungsanteile des Mittels Nr. 1 betragen 100 g KCl, 50 g CaCl₂ und 180g MgCl₂; Die Mischungsanteile des Mittels Nr. 2 betragen 0,5 g Gerbsäure, 0,5 g Carrageengummi und 10g Alginsäure jeweils pro 1 l Wasser.

Mit der vorliegenden Erfindung wird erreicht, daß alle oben beschriebenen Probleme, die bei der Verwendung von Leitungs- oder Trinkwasser zum Wasserwechsel in biologischen Hälterungssystemen auftreten, reduziert oder beseitigt werden, ohne daß es zur Einbringung von biologisch bzw. ökologisch fremden Stoffen in das Hälterungssystem, z. B. Aquarien kommt.

Überraschenderweise lassen sich alle Probleme bei frischem Leitungs- oder Trinkwasser lösen, indem nicht die oben beschriebenen synthetischen Verbindungen eingesetzt werden, sondern ausschließlich Stoffe oder Verbindungen, die natürlich vorkommen bzw. in natürlichen Systemen von Organismen (pflanzlichen und tierischen Organismen, Mikroorganismen) produziert werden.

Diese Stoffe finden sich zum Teil als Stoffwechselprodukte in natürlichen Wässern in Steady-State-Konzentrationen als Resultat biologischer Produktions- und Abbauprozesse.

Werden die in dieser Erfindung beschriebenen natürlich vorkommenden Stoffe eingesetzt, um die negativen Aspekte, die mit frischem Leitungswasser verbunden sind, zu eliminieren, so werden alle gewünschten Positiveffekte eines Wasserwechsels beim Zusatz von frischem Leitungswasser zum Hälterungssystem erreicht, und damit die möglichen schädigenden Faktoren eliminiert, die mit einem Wasserwechsel verbunden sind.

Nach der chemischen Reaktion der zugesetzten natürlichen Additive im Frischwasser liegen als unverbrauchte Stoffe und Folgeprodukte nur noch Verbindungen vor, die ohne Probleme biologisch abbaubar sind.

Zusätzlich zu ihrer Schadfaktorreduktion entfalten die zugesetzten natürlichen Verbindungen selbst oder ihre Reaktions- bzw. Abbauprodukte weitere positive Effekte in dem Ökosystem, z. B. dem Aquarium.

Die hier als erfindungsgemäße Lösung präsentierte variante der Aufbereitung von biologisch-ökologisch ungünstigem Leitungs- oder Trinkwasser ist neuartig und in der Summe ihrer positiven Wirkungen auch für den Fachmann überraschend. Es ist damit erstmals möglich, steriles, aggressives Leitungs- oder Trinkwasser in naturnahes biologisch freundliches Hälterungswasser mit natürlichen Wirkstoffen zu verwandeln und parallel dazu weitere förderliche Faktoren einzubringen bzw. auf biologischem Wege entstehen zu lassen.

Gegenstand der vorliegenden Erfindung ist ein Mittel zur Herstellung von biologisch vortheilhaften bis naturnahem Hälterungswasser für Wassertiere gemäß Anspruch 1 sowie die Verwendung des Mittels gemäß Anspruch 6.

Im folgenden werden anhand der Frischwasser-Problemfaktoren für Hälterungssysteme, z. B. Aquarien, die erfindungsgemäßen Problemlösungen beschrieben:

Natürliche Reduktionsmittel für Chlor und andere Aktivchlorverbindungen:

Zu diesem Zweck sind alle natürlichen Stoffe einsetzbar, die selbst nicht toxisch, biologisch abbaubar sind und gegenüber Chlor und anderen Aktivchlorverbindungen, z. B. Chloramin, Chlordioxid u. a. reduzierende Wirkung entfalten. Beispiele hierfür sind:
- Reduzierende Carbonsäuren und deren Salze, z. B. Ameisensäure, oxalsäure,
- reduzierende natürliche Verbindungen mit Aldehydgruppen, z. B. Aldosen, Uronsäuren, wie z. B. Erythrose, Threose, Arabinose, Glucose, Mannose, Galaktose, Glucuronsäure, Mannuronsäure, Galakturonsäure,
- Verbindungen, die Thioäther und Thiohydroxy-Gruppen enthalten, z. B. Methionin, Cystein, Glutathion, D-Penicillamin,
- diverse natürliche Reduktionsmittel wie Ascorbinsäure, Gerbsäuren, Tannine.

Die Anwendungskonzentration orientieren sich stöchiometrisch an den zu erwartenden Konzentrationen der Oxidationsmittel (Chlor und Aktivchlorverbindungen) und liegen im Bereich von 0,5 - 20 mg/l.

Zur Verringerung der Schwermetalltoxizität einsetzbare natürliche Komplexbildner erreichen zwar meist nicht die extrem hohen Komplexbildungskonstanten der synthetischen Komplexbildner, wie EDTA, DTPA u. a., führen jedoch ebenfalls zu einer erheblichen Senkung bis Eliminierung der Schwermetalltoxizität, insbesondere auch dadurch, daß sie aufgrund ihrer hohen Bioverträglichkeit in großem stöchiometrischem Überschuß eingesetzt werden können. Durch Bildung von 2 : 1 - und 3 : 1 -Komplexen (mit sogar noch höheren Verhältnissen) (im Gegensatz zu den 1 : 1 - Komplexen der synthetischen Komplexbildner) werden ebenfalls ausreichend hohe Maskierungsuffekte der toxischen Metalle und damit eine effektive Entgiftung gegenüber den Wasserorganismen erreicht.

Ein weiterer Vorteil der natürlichen Komplexbildner besteht in der guten biologischen Abbaubarkeit der Liganden. Während des Abbaus kommt es zwangsläufg zu einer Inkorporierung und Immobilisierung der toxischen Zentralmetallionen in den abbauenden Mikoorganismen und dadurch zu einer Beseitigung der im Wasser gelösten toxischen Metalle.

Dies steht in positivem Gegensatz zu der Entgiftung mit EDTA und analogen Verbindungen, deren Metallkomplexe biologisch nur sehr langsam abgebaut werden und daher im Wasser in gelöster Form lange vorhanden sind.

Beispiele natürlicher Komplexbildner sind:
- Organische Carbonsäuren und deren Salze mit 2- und mehrzähnigen Ligandeneigenschaften wie Oxalsäure, Weinsäure, Citronensäure, Mono- und Dicarbonsäuren von Triosen, Tetrosen, Pentosen, Hexosen, wie z. B. Gluconsäure, Mannonsäure-, D-Zuckersäure, Mannozuckersäure, Schleimsäure.
- Polymere mit Carboxylgruppen, z. B. Alginsäure und Alginate, Polyglucuronsäure (Hemicellulose), Gummi Arabicum, Ghatti Gummi, Tragacanth Gummi, Pektine, Xanthan.

Die Molgewichte der natürlichen Biopolymere liegen in den folgenden Bereichen:

| | |
|---|---|
| Alginsäure, Alginate | 100000 - 500000 D |
| Polyglucuronsäure | 50000 - 500000 D |
| Gummi Arabicum | 250000 - 1000000 D |
| Ghatti Gummi | 100000 - 1000000 D |
| Tragacanth Gummi | bis 800000 D |
| Pektine | 50000 - 180000 D |
| Xanthan | 100000 - 1000000 D |

- Aminosäuren, wie z. B. Glycin, Alanin, Valin, Leucin, Isoleucin, Phenylalanin, Tyrosin, Prolin, Hydroxyprolin, Tryptophan, insbesondere Serin, Threonin, Cystein, Methionin, Asparaginsäure, Aspartinsäure, Glutaminsäure, Arginin, Lysin, Histidin, Ornithin.
- natürliche Komplexbildner wie L-Dopa, D-Penicillamin.
- natürliche vorkommende Phenolcarbonsäuren (Hydroxybenzoesäure- und Hydroxyzimtsäurederivate, wie z.B. Gallussäure, Gallotannine, Chlorogensäuren, Kaffeesäure, Chinasäure).
- natürliche Huminsäuren und Fulvinsäuren, gewonnen aus Humusstoffen im Boden, aus Torf, aus Gewässern, sowie Gerbsäuren, Tannine.
- natürlich vorkommende Porphyrinsysteme bzw. Porphyrinfarbstoffe wie Chlorophylle (Mg²⁺-Komplexe), die auch verseift und entmetallisiert ohne Zentralmetall einsetzbar sind.
- Gallenfarbstoffe, wie Bilirubin.
- natürliche Peptide und Proteine, z. B. Glutathion, Casein, Albumin, Lactalbumin.

Die Anwendungskonzentrationen der natürlichen Komplexbildner orientieren sich an den zu erwartenden oder vorherrschenden Schwermetallkonzentrationen im Trinkwasser und liegen im Bereich von 1 - 20 mg/l.

Natürliche Hydro-/Biokolloide zum Senken der Aggressivität von Leitungswasser und zum Schutz der Schleimhäute von Wasserorganismen.

Anstelle der synthetischen Hydrokolloide PVP und Cellulosederivate lassen sich sehr gut Hydrokolloide einsetzen, die von Pflanzen, Algen, Mikroorganismen gebildet werden.
- Pflanzliche Hydrokolloide, wie z. B. Guar Gummi, Gummi Arabicum, Ghatti Gummi, Karaya Gummi, Tragacanth Gummi, Carob Gummi, Pektine, Dextrine, Tamarind Gummi.

Die Molgewichte der pflanzlichen Hydrokolloide liegen in den folgenden Bereichen:

| | |
|---|---|
| Guar Gummi | 100000 - 1000000 D |
| Gummi Arabicum | 100000 - 1000000 D |
| Ghatti Gummi | 100000 - 1000000 D |
| Karaya Gummi | 100000 - 1000000 D |
| Tragacanth Gummi | 100000 - 1000000 D |
| Carob Gummi | 100000 - 1000000 D |
| Pektine | 100000 - 1000000 D |
| Tamarind Gummi | 50000 - 120000 D |
| Dextrine | 50000 - 500000 D |

- von Algen produzierte Hydrokolloide, wie z. B. Alginsäure, Alginate, Carrageenan, Furcelleran, Agar Agar, Danish Agar.

Die Molgewichte der von Algen produzierten Hydrokolloide liegen in folgenden Bereichen:

| | |
|---|---|
| Alginsäure, Alginate | 100000 - 500000 D |
| Carrageenan | 50000 - 500000 D |
| Furcelleran | 50000 - 500000 D |
| Agar Agar | 50000 - 500000 D |
| Danish Agar | 50000 - 500000 D |

- von Mikroorganismen produzierte Kolloide, wie z. B . Xanthan Gummi, Scleroglucan, Curdlan (Succinoglucan), Pullulan.

Die Molgewichte der von Mikroorganismen produzierten Biokolloide liegen in folgenden Bereichen:

| | |
|---|---|
| Xanthan Gummi | 100000 - 1000000 D |
| Scleroglucan | 50000 - 500000 D |
| Curdlan (Succinoglucan) | 50000 - 500000 D |
| Pullulan | 50000 - 500000 D |

Die Anwendungskonzentrationen der Biokolloide erreichen 1 - 20 mg/l. Weiterhin verwendbare zellschützende, bakterienfördernde und ökologisch vorteilhafte Verbindungen:

Neben den bereits oben definierten und aufgeführten Substanzen, die zusätzlich zu ihrer funktionalen Aufgabenrolle aufgrund ihrer leichten biologischen Abbaubarkeit auch die bioaktiven Mikroorganismen fördern, existieren eine Reihe natürlicher Verbindungen, die sich als allgemein zellschützend, z. B. gegen chemische bzw. osmotische Milieuschwankungen erwiesen haben.

Ein Zusatz solcher Stoffe zu einem Trinkwasser-Konditionierungsprodukt entfaltet gerade bei dem durch Wasserwechsel verursachten Streß zell- und organismusschützende Funktionen.

Die folgenden Verbindungen sind für diese Zwecke einsetzbar:
- Kohlenhydrate, z. B. die Disaccharide Saccharose, Lactose, Maltose, Sucrose, Trehalose sowie Polysaccharide wie Pektine, Hemicellulosen, Dextrine, Xylane.

Die Molgewichte der Biopolymere liegen in folgenden Bereichen:

| | |
|---|---|
| Pektine (Hemicellulosen) | 50000 - 180000 D |
| Dextrine | 50000 - 500000 D |
| Xylane | 50000 - 500000 D |

- monomere Zucker, z. B. Glucose, Fructose, Mannose, Galaktose, Ribose, Arabinose, Erythrose, Threose.
- Zuckeralkohole, z. B. Glycerin, Sorbit, Erythrit, Mannit, Inosit.
- Aminosäuren wie oben unter Komplexbildnern aufgeführt.
- natürliche Betaine, wie z. B . Betain (Trimethylglycin).

Die Anwendungskonzentrationen liegen bei 5 - 20 mg/l.

Korrekturadditive zur Annäherung der chemischen Eigenschaften von Leitungs- und Trinkwasser, Brunnenwasser und Regenwasser an die Gegebenheiten natürlicher Gewässer sind ebenfalls in der erfindungsgemäßen Zubereitung einsetzbar. Hier kommt vor allem der Zusatz von Mg²⁺-Salzen in Betracht.

Der Mangel an Mg²⁺-Salzen oder sogar deren Abwesenheit in den eingesetzten Frischwässern bzw. das in der Regel vorherrschende zu hohe Ca : Mg -Verhältnis kann durch Zusatz von Mg-Salzen korrigiert werden. Dabei ist es von Vorteil, zumindest zum Teil Mg-Salze der patentgemäß eingesetzten, oben beschriebenen Carbonsäuren, Aminosäuren, Humin- und Fulvinsäuren sowie als Porphyrinkomplex (Chlorophylle) einzusetzen, um die Zufuhr an in Mg-Salzen gängigeren Anionen wie Cl⁻ oder SO₄ zu minimieren. Verwendbar sind daher
- Mg²⁺-Salze der erfindungsgemäß eingesetzten Carbonsäuren, Aminosäuren, Humin- und Fulvinsäuren.
- Mg²⁺-Komplexe (als Chlorophylle).
- Mg-Chlorid oder -Sulfat in möglichst geringer Menge.

Die Anwendungskonzentration im Frischwasser sollte 1 - 10 mg/l Mg²⁺ erreichen.

Ein weiteres Korrekturadditiv besteht im Zusatz von Jodid. Die im Binnenland sehr häufig anzutreffende Jodarmut der Leitungs und Trinkwässer kann durch den Zusatz von Jodiden oder Jodaten, z. B. NaJ, KJ, KJO₃ zu dem Frischwasser ausgeglichen werden.

Die Anwendungskonzentration im zugesetzten Frischwasser soll zwischen 5 und 20 µg/l Jodid liegen oder zwischen 7 und 28 µg/l Jodat.

Die oben beschriebenen erfindungsgemäßen Lösungen von Einzelproblemen lassen sich in der Kombination aller Einzelproblemlösungen zur natürlichen Wasseraufbereitung von Leitungs- oder Trinkwässern einsetzen.

Die unter jeder Einzelproblemlösung aufgelisteten Substanzen sind einzeln oder kombiniert zu verwenden, wobei die Summe der Einzelsubstanzkonzentrationen, d. h. ihre Gesamtkonzentration, jeweils die unter jeder Einzelproblemlösung angegebenen Konzentrationsgrenzen erreichen sollte.

Die beschriebenen Einzelproblemlösungen bzw. Substanz- oder Funktionsgruppen werden, wie unter oben beschrieben zur natürlichen Wasseraufbereitung von Leitungs- oder Trinkwasser verwendet. Dabei wird dem Frischwasseranteil (an Leitungs- oder Trinkwasser) ein Fertigprodukt zugesetzt, welches die verschiedenen Substanzgruppen in den vorgegebenen Konzentrationen einbringt.

Es ist auch möglich, die Dosierung des Frischwasser-Konditionierungsproduktes auf die gesamte Menge an Hälterungswasser (nicht gewechselter Anteil plus gewechselten Frischwasseranteil) zu beziehen.

Eine weitere Methode zur Erhaltung eines biologisch aktiven, naturnahen Hälterungswassers ist die häufige periodische Zudosierung, z. B. täglich, alle 2 - 3 Tage oder wöchentlich, des Wasserkonditionierungsmittels in entsprechend geringerer Dosierung. Durch ständige Zudosierung und raschen biologischen Abbau werden niedrig liegende Steady-State-Konzentrationen der einzelnen Komponenten erreicht.

Diese Art der quasi-kontinuierlichen Zudosierung eignet sich allerdings weniger für die Mg²⁺-Supplementierung, bei der es auf eine rasche Anfangskonzentrationsanhebung ankommt.

Die oben beschriebenen Konbinationsprodukte lassen sich in verschiedenen Applikationsformen zur Anwendung bringen, nämlich sowohl in Form
- flüssiger Produkte, z. B. wäßriger Lösungen, aber auch in Form
- fester Zubereitungen, z. B. als Tabletten, Pulvergemisch, Granulat, Extrudat, Kapseln u. a. einsetzen.

Die Gesamtmenge an Wirksubstanzen bzw. die Produktmenge bei gegebener Konzentration an Wirksubstanzen bestimmen die Produktreichweite, d. h. die zu behandelnde Wassermenge.

Zusätzlich zu den erfindungsgemäßen Komponenten können die Fertigprodukte weitere, dem Fachmann nach dem Stand der Technik geläufige Rezepturkomponenten enthalten, wie z. B.
- synthetische Aufbereitungskomponenten wie in DE 22 21 545 beschrieben,
- Puffer (auf möglichst natürlicher Basis),
- Konservierungsmittel,
- Farbstoffe,
- Geruchs- und Geschmacksstoffe, und/oder
- Verdickungsmittel.

Die nachfolgenden praktischen Beispiele sollen die Erfindung näher veranschaulichen.
1) Produkt mit komplettem Funktionssatz, enthaltend alle erfindungsgemäßen Funktionen, das nach Zusatz zum Hälterungswasser/Frischwasser folgende Konzentrationen an natürlichen funktionalen Komponenten einstellt:

| | |
|---|---|
| Citronensäure | 40 µMol/l |
| Glutaminsäure | 10 µMol/l |
| Formiat | 40 µMol/l |
| Xanthan | 0,5 mg/l |
| Gummi Arabicum | 1,0 mg/l |
| Pektin | 0,5 mg/l |
| Agar Agar | 1,0 mg/l. |
| Mg²⁺ | 5 mg/l |
| J⁻ | 20 µg/l |
| Betain | 2 mg/l |

2) Produkt mit komplettem Satz an natürlichen Funktionen, wie unter 1) beschrieben, zusätzlich zur Verstärkung gezielter Funktionen Komponenten nach dem Stand der Technik (DE 22 21 545) enthaltend. Bei empfohlener Dosierung werden folgende Einzelkonzentrationen im Hälterungswasser/Frischwasser erzeugt:

| | |
|---|---|
| Ethylendiamintetraacetat | 10 µMol/l |
| Citronensäure | 40 µMol/l |
| Glutaminsäure | 20 µMol/l |
| Formiat | 40 µMol/l |
| Polyvinylpyrrolidon | 3 mg/l |
| Hydroxyethylcellulose | 1 mg/l |
| Xanthan | 1 mg/l |
| Gummi Arabicum | 1 mg/l |
| Pektin | 1 mg/l |
| Agar Agar | 1 mg/l |
| Mg²⁺ | 8 mg/l |
| J⁻ | 10 µg |
| Betain | 2 mg/l |

Die Vorteile der erfindungsgemäßen Aufbereitungsmittel sind erheblich. Gegenüber Produkten nach dem Stand der Technik werden durch Kombination von ausschließlich oder vorwiegend natürlich vorkommender Wirksubstanzen folgende Produktfunktionen in Kombination erreicht:
- Reduktion von Chlor und anderen Aktivchlorsubstanzen,
- Komplexierung von toxischen Schwermetallen und Verringerung der Metalltoxizität,
- Reduzierung der Aggressivität von Leitungswasser und Schleimhautschutz,
- Zellschutz, Förderung der Bakterien und des Ökosystems,
- Supplementierung des Mg²⁺- und J⁻-Gehaltes.

Weitere Vorteile der Anwendung natürlicher Substanzen sind:
- leichte mikrobielle Abbaubarkeit,
- nach Erfüllung ihrer Funktion erreichen die Wirkstoffe nur kurze Verweilzeiten im Hälterungswasser,
- beim Abbau entstehen pflanzenfördernde Stoffe, in der Hauptsache Kohlendioxid,
- sehr gute Verträglichkeit für alle tierischen und pflanzlichen Wasserorganismen,
- keine Kumulierung bei wiederholter Anwendung,
- auch zwischen den Wasserwechseln einsetzbar, und
- quasikontinuierliche, unterdosierte Anwendung erzeugt niedrige Steady-State-Konzentrationen der wichtigen natürlichen Wirkstoffe.

## Patentansprüche

1. Mittel zur Herstellung von biologisch vorteifhaftem bis naturnahem Hälterungswasser für Wassertiere, enthaltend:
a) natürliche Reduktionsmittel für Chlor und andere Aktivchlorverbindungen, ausgewählt aus der Gruppe:
Ameisensäure, Oxalsäure, Erythrose, Threose, Arabinose, Glucose, Mannose, Galaktose, Glucuronsäure, Mannuronsäure, Galakturonsäure, Methionin, Cystein, Glutathion, D-Penicillamin, Ascorbinsäure, Gerbsäuren und/oder Tannine;
b) natürliche Komplexbildner, ausgewählt aus der Gruppe:
Oxalsäure, Weinsäure, Citronensäure, Gluconsäure, Mannonsäure-, D-Zuckersäure, Mannozuckersäure, Schleimsäure, Alginsäure und Alginate, Polyglucuronsäure (Hemicellulose), Gummi Arabicum, Ghatti Gummi, Tragacanth Gummi, Pektine, Xanthan, Glycin, Alanin, Valin, Leucin, Isoleucin, Phenylalanin, Tyrosin, Prolin, Hydroxyprolin, Tryptophan, Serin, Threonin, Cystein, Methionin, Asparaginsäure, Aspartinsäure, Glutaminsäure, Arginin, Lysin, Histidin, Ornithin, L-Dopa, D-Penicillamin, Gallussäure, Gallotannine, Chlorogensäuren, Kaffeesäure, Chinasäure, Gerbsaüren, Tannine, Chlorophylle, Bilirubin, Glutathion, Casein, Albumin, Lactalbumin;
c) natürliche Hydro- oder Biokolloide, ausgewählt aus der Gruppe:
Guar Gummi, Gummi Arabicum, Ghatti Gummi; Karaya Gummi, Tragacanth Gummi, Carob Gummi, Pektine, Dextrine, Tamarind Gummi, Alginsäure, Alginate, Carrageenan, Furcelleran, Agar Agar, Danish Agar, Xanthan Gummi, Scleroglucan, Curdlan (Succinoglucan), Pullulan;
d) natürliche oder naturnahe zellschützende und bakterienfördernde Verbindungen, ausgewählt aus der Gruppe:
Saccharose, Lactose, Maltose, Sucrose, Trehalose, Glucose, Fructose, Mannose, Galaktose, Ribose, Arabinose, Erythrose, Threose, Glycerin, Sorbit, Erythrit, Mannit, Inosit, Glycin, Alanin, Valin, Leucin, Isoleucin, Phenylalanin, Tyrosin, Prolin, Hydroxyprolin, Tryptophan, Serin, Threonin, Cystein, Methionin, Asparaginsäure, Aspartinsäure, Glutaminsäure, Arginin, Lysin, Histidin, Ornithin und/oder Trimethylglycin;
und
e) Korrekturadditive zur Annäherung natürlicher Gewässerqualität, ausgewählt aus der Gruppe:
Mg²⁺-Salze von Carbonsäuren, Aminosäuren, Humin- und Fulvinsäuren, Mg²⁺-Komplexen, MgCl₂/ MgSO₄, MgJ₂/ NaJ, KJ und/oder KJO₃
wobei die einzelnen Komponenten in vorgegebener Konzentration so einbringbar sind, dass bei Zugabe zu Frischwasser oder Leitungswasser folgende Konzentrationen erreicht werden:
a) 0,5 - 20 mg / l;
b) 1 - 20 mg / l;
c) 1 - 20 mg / l;
d) 5 - 20 mg /l; und
e) 1 -10 mg /l Mg²⁺und 5 bis 20 µg /l Jodid oder 7 bis 28 µg / l Jodat.

2. Mittel gemäß Anspruch 1, enthaltend Citronensäure, Glutaminsäure, Formiat, Xanthan, Gummi Arabicum, Pektin, Agar Agar, Mg2+, J - und Betain.

3. Mittel gemäß Anspruch 1 oder 2, **dadurch gekennzeichnet, dass** es als konzentrierte wässrige Lösung zubereitet ist.

4. Mittel gemäß einem der Ansprüche 1 bis 3, **dadurch gekennzeichnet, dass** sie in Form von Tabletten, Pulvergemischen, Granulaten, Extrudaten oder Kapseln zubereitet sind.

5. Mittel gemäß Anspruch 3 oder 4, **dadurch gekennzeichnet, dass** es als Einzeldosierung für eine definierte Menge Wasser konfektioniert ist.

6. Verwendung eines Mittels nach einem der Ansprüche 1 bis 5 zur Herstellung von biologisch vorteilhaftem bis naturnahem Hälterungswasser für Wassertiere.

## Claims

1. Means for manufacturing biologically advantageous and near natural cultivating water for aquatic animals containing:
a) natural reducing agents for chlorine and other compounds containing active chlorine selected from the group:
formic acid, oxalic acid, erythrose, threose, arabinose, glucose, mannose, galactose,glucuronic acid, mannuronic acid, galacturonic acid methionine, Cysteine, glutathione, D-penicillamine, ascorbic acid, tannic acids and/or tannins,
b) natural complex forming agents selected from the group:
oxalic acid, tartaric acid, citric acid, gluconic acid, mannonic acid, D-saccharic acid, mannosaccharic acid, mucic acid. Alginic acid, and alginates, pylyglucuronic acid, (hemicellulose), arabic gum, ghatti gum, tragacanth, gum, pectines, xanthane, glycine, alanine, valine, leucine, isoleucine, phenylalanine, tyrosine, proline, hydroxyproline, tryptophane, serine, threonine, cysteine, methionine, asparagic acid, aspartic acid, glutamic acid, arginine, lysine, histidine, ornithine, I-dopa, D-penicillamine, gallic acid, gallotannins, chlorogenic acids, caffeic acid, quinic acid,tannic acids, tannins, chlorophylls, bilirubine, glutathione, caseine, albumine lactalbumine;
c) natural hydro- or biocolloids selected from the group:
guar gum, Arabic gum, ghatti gum, karaya gum, tragacanth, gum, carob gum, pectines, dextrines, tamarind gum, alginic acid, alginates, carrageenan, furcellerane, agar agar, Danish agar, xanthan-gum, cscleroglucane, curdlan,
(succinoglucane), pullulane;
d) natural or near natural cell protecting and bacteria boosting compounds selected from the group:
saccharose, lactose, maltose, sucrose, trehalose, glucose, fructose, mannose, galactose, ribose, arabinose, erythrose, threose, glycerol, sorbitol, erythritol, mannitol, inositol, glycine, alanine, valine, leucine, isoleucine, phenylalanine, tyrosine, proline, hydroxyproline, tryptophane, serine, threonine, cysteine, methionine, aspartic acid, aspartinic acid, glutamic acid, arginine, lysine, histidine, ornithine, and/or trimethylglycine;
e) correcting additives for approaching water quality to natural water quality selected from the group.
Mg"+-salts of carbonic acids, amino acids, humic acid and fulvic acid, Mg2+-complexes, MgCl2/MgSO4, MgJ2/NaJ and/or KJO3,
wherein the single components in a given concentration may be inserted in a way, that by adding fresh water or tap water the following concentrations may be reached:
a) 0,5-20 mg/l;
b) 1-20 mg/ l;
c) 1-20 mg/l
d) 5-20 mg/ l;
1-10 mg/l Mg2+ and 5 to 20 µg /l iodide or 7 to 28 µg /I iodate..

2. Means according to Claim 1 containing citric acid, glutamic acid, formiate, xanthan, Arabic gum, pectine, agar agar, Mg2+, J- and betain.

3. Means according to Claims 1 or 2, **characterized in that** it is prepared as a concentrated aqueous solution.

4. Means according to Claims 1 to 3 , **characterized in that** they are prepared in the form of tablets, mixtures of powders, granulates, extrudates or capsules.

5. Means according to Claims 3 or 4, **characterized in that** it is confectionated as a single dose for a defined amount of water.

6. Use of a means according to anyone of Claims 1 to 5 for the manufacturing of an advantageous an near natural water for cultivating aquatic animals.

## Revendications

1. Produits pour la préparation d'eau d'entretien pour animaux aquatiques, biologiquement avantageuse à presque naturelle, contenant :
a) des agents réducteurs naturels pour le chlore et autres composés de chlore actif, choisis dans le groupe suivant :
acide formique, acide oxalique, érythrose, thréose, arabinose, glucose, mannose, galactose, acide glucuronique, acide mannuronique, acide galacturonique, méthionine, cystéine, glutathion, D-pénicillamine, acide ascorbique, acides tanniques et/ou tannins ;
b) agents complexants naturels, choisis dans le groupe suivant:
acide oxalique, acide tartrique, acide citrique, acide gluconique, acide mannonique, acide D-saccharique, acide manno-saccharique, acide mucique, acide alginique et alginates, acide polyglucuronique (hémicellulose), gomme arabique, gomme de ghatti, gomme adragante, pectine, xanthane, glycine, alanine, valine, leucine, isoleucine, phénylalanine, tyrosine, proline, hydroxyproline, tryptophane, sérine, thréonine, cystéine, méthionine, acide asparagique, acide aspartique, acide glutamique, arginine, lysine, histidine, ornithine, L-dopa, D-pénicillamine, acide gallique, gallotannins, acides chlorogéniques, acide caféique, acide quinique, acides tanniques, tannins, chlorophylle, bilirubine, glutathion, caséine, albumine, lactalbumine.
c) hydro ou biocolloïdes naturels, choisis dans le groupe suivant:
gomme guar, gomme arabique, gomme de ghatti, gomme de karaya, gomme adragante, gomme de caroube, pectines, dextrines, gomme de tamarin, acide alginique, alginates, carraghéen, furcellerane, agar agar, agar danois, gomme xanthane, scléroglucane, curdlane (succinoglucane), pullulane;
d) composés protégeant les cellules et favorisant l'action des bactéries, naturels ou presque naturels, choisis dans le groupe suivant:
saccharose, lactose, maltose, sucrose, tréhalose, glucose, fructose, mannose, galactose, ribose, arabinose, érythrose, thréose, glycérol, sorbite, érythrite, mannite, inosite, glycine, alanine, valine, leucine, isoleucine, phénylalanine, tyrosine, proline, hydroxyproline, tryptophane, sérine, thréonine, cystéine, méthionine, acide asparagique, acide aspartique, acide glutamique, arginine, lysine, histidine, omithine et/ou triméthylglycine;
et
e) additifs correcteurs pour s'approcher de la qualité des eaux naturelles, choisis dans le groupe suivant:
sels de Mg²⁺ d'acides carboxyliques, aminoacides, acides humique et fulvique, complexes de Mg²⁺, MgCl₂/MgSO₄, MgI₂/NaI, KI et/ou KIO₃,
les différents composants pouvant être introduits en une concentration prédéterminée permettant d'obtenir, par addition à de l'eau douce ou de l'eau du robinet, les concentrations suivantes:
a) 0,5 - 20 mg/l ;
b) 1 - 20 mg/l ;
c) 1 - 20 mg/l ;
d) 5 - 20 mg/l ; et
e) 1 - 10 mg/l de Mg²⁺ et 5 à 20 µg /ld'iodure ou 7 à 28 µg /l d'iodate.

2. Produit selon la revendication 1, contenant de l'acide citrique, de l'acide glutamique, un formiate, du xanthane, de la gomme arabique, de la pectine, de l'agar agar, Mg²⁺, I⁻ et de la bétaïne.

3. Produit selon la revendication 1 ou 2, **caractérisé en ce qu'**il est préparé sous forme de solution aqueuse concentrée.

4. Produit selon l'une quelconque des revendications 1 à 3, **caractérisé en ce qu'**il est proposé sous forme de comprimés, mélanges de poudres, granulés, extrudats, ou capsules.

5. Produit selon la revendication 3 ou 4, **caractérisé en ce qu'**il est confectionné en tant que dosage individuel pour une quantité d'eau définie.

6. Utilisation d'un produit selon une quelconque des revendications 1 à 5 pour la préparation d'eau d'entretien biologiquement avantageuse à presque naturelle pour animaux aquatiques.
